# EUROPEAN PATENT APPLICATION

(11) **EP 3 133 771 A1**
(43) Date of publication of application: **22.02.2017**
(21) Application number: 14889466.0
(22) Date of filing: 17.09.2014
(51) Int. Cl.: H04L 12/24, H04L 12/803, H04L 1/22

(54) **VIRTUAL MACHINE RESOURCE CHANGING METHOD, DEVICE AND VIRTUAL NETWORK FUNCTION DEVICE**

(30) Priority: 14.04.2014 CN 201410147817
(71) Applicant: ZTE Corporation, Shenzhen, Guangdong 518057 (CN)
(72) Inventor: LU, Yunxu, Shenzhen, Guangdong 518057 (CN)
(74) Representative: Novagraaf Technologies
(86) International application number: PCT/CN2014/086768
(87) International publication number: WO 2015/158108

(57) **Abstract**

Provided are a Method and apparatus for changing Virtual Machine (VM) resources, and a Virtualized Network Function (VNF) device. The Method for changing VM resources includes that: a changing policy for VMs of a VNF is determined; and the VMs are changed in batches according to the changing policy. The technical scheme solves the problem of interruption of service units running on VMs resulted from VM changing of a VNF, thereby allowing the service units running on some or all of the VMs to be uninterrupted.

## Description

### Technical Field

The present disclosure relates to the field of communications, and in particular to a method and apparatus for changing Virtual Machine (VM) resources, and a Virtualized Network Function (VNF) device.

### Background

In order to improve the utilization rate of device resources and the efficiency of service deployment and to reduce the OPEX and CAPEX, a European Telecommunications Standards Institute (ETSI) has developed a Network Functions Virtualization (NFV) protocol standard, and functional units, such as a Network Functions Virtualization Orchestrator (NFVO), a Virtualized Network Function Manager (VNFM), a Virtualized Infrastructure Manager (VIM), a Network Functions Virtualization Infrastructure (NFVI) and a VNF, are introduced in an End-to-End reference architecture.

The NFVO is primarily responsible for a network service function, virtual resource and physical resource orchestration functions and relevant management functions of the whole network. The VNFM is primarily responsible for life cycle management of a VNF and allocation and management of virtual resources relevant to the VNF. The VIM is primarily responsible for virtualized infrastructure management, and mainly functions as computing and storing the whole infrastructure layer resources and allocating and managing network resources. The NFVI serves as a virtualized resource layer and includes a newly added virtualization platform and original hardware resources. The VNF, namely a virtualized network element, is deployed on the NFVI, and executes network element functions defined by a 3^{rd} Generation Partnership Project (3GPP). The VNF keep the same functions before the network element is virtualized, for example, the VNF may function as an Evolved Packet Core (EPC), a Mobile Management Entity (MME) and the like. The NFVO and the VNFM cooperatively complete the life cycle management of the VNF, including On-Boarding, instantiation, capacity expansion, capacity reduction, upgrading and ending processes.

In the life cycle management of the VNF defined by the ETSI, behaviour types of VMs of the VNF are defined, including scale out, scale in, scale up, scale down, network capacity increase, bandwidth increase and the like; and elastic shrinkage, capacity expansion and capacity reduction solving methods and flows of the VNF are standardized. In changing operations such as scale up and scale down of VMs, it is inevitable to trigger the restart of relevant VMs of the VNF. The ETSI considers that a changing operation on all relevant VMs of a certain specific VNF is completed at one time. Thus, in VNF capacity expansion and capacity reduction flows, it is defined that the VNFM initiates, for one time, a VM changing application to the NFVO and the NFVO requests a VIM to complete changing of involved VM resources and returns a response to the VNFM. But actually, in the case where the VIM needs to restart one or more VMs, one-time VM changing will cause restart of all relevant VMs, thereby causing that service units running on these VMs cannot work so as to result in service interruption.

An effective solution has not been proposed yet currently for the problem of interruption of service units running on VMs resulted from VM changing of a VNF in the related art.

### Summary

Embodiments of the present disclosure provide a method and apparatus for changing VM resources, and a VNF device, which are indented to at least solve the problem of interruption of service units running on VMs resulted from VM changing of a VNF in the related art.

According to one aspect of the embodiments of the present disclosure, a method for changing VM resources is provided, which may include that: a changing policy for VMs of a VNF is determined; and the VMs are changed in batches according to the changing policy.

In an exemplary embodiment, the step that the changing policy for the VMs of the VNF is determined may include that: the changing policy is determined according to a working mechanism of the VMs, wherein the working mechanism includes at least one of: an active and standby mechanism of VMs and a load sharing mechanism of the VMs.

In an exemplary embodiment, the changing policy may include at least one of: a changing sequence of each of the VMs and a changing batch number of each of the VMs.

In an exemplary embodiment, the step that the changing policy for the VMs of the VNF is determined may include that: the changing policy is directly determined; or the changing policy is determined via negotiation with the VNF.

In an exemplary embodiment, the step that the VMs are changed in batches according to the changing policy may include that: multiple requests are initiated to an NFVO according to the changing policy to request the NFVO to change the VMs, wherein each request contains one or more VMs to be changed based on this request, and the NFVO is configured to change, in response to each request, the one or more VMs to be changed based on this request.

In an exemplary embodiment, before the VMs are changed in batches according to the changing policy, the method may further include that: at least one response to at least one VM changing request initiated by the VNF and/or the NFVO is made.

In an exemplary embodiment, the step that the VMs are changed in batches according to the changing policy may include that: in response to multiple changing requests initiated by the VNF according to the changing policy, multiple requests, each of with requests to change one or more VMs to be changed based on this request, are respectfully initiated to the NFVO, wherein the NFVO is configured to change, in response to each request, the one or more VMs to be changed based on this request.

According to another aspect of the embodiments of the present disclosure, an apparatus for changing VM resources is provided, which may include: a determination component, configured to determine a changing policy for VMs of a VNF; and a changing component, configured to perform resource change for the VMs in batches according to the changing policy.

In an exemplary embodiment, the determination component may be configured to determine the changing policy according to a working mechanism of the VMs, wherein the working mechanism includes at least one of: an active and standby mechanism of VMs and a load sharing mechanism of the VMs.

In an exemplary embodiment, the determination component may be configured to: directly determine the changing policy; or determine the changing policy via negotiation with the VNF.

In an exemplary embodiment, the changing component may be configured to initiate multiple requests to an NFVO according to the changing policy to request the NFVO to change the VMs, wherein each request contains one or more VMs to be changed based on this request, and the NFVO is configured to change, in response to each request, the one or more VMs to be changed based on this request.

In an exemplary embodiment, the apparatus may further include: a response component, configured to respond to at least one VM changing request initiated by the VNF and/or the NFVO.

In an exemplary embodiment, the changing component may include: a response unit, configured to respond to multiple changing requests which are initiated by the VNF according to the changing policy; and a changing unit, configured to respectively initiate multiple requests, each of which requests to change one or more VMs to be changed based on this request, to the NFVO, wherein the NFVO is configured to change, in response to each request, the one or more VMs to be changed based on this request.

According to another aspect of the embodiments of the present disclosure, a VNFM device is provided, which may include any apparatus according to the above-mentioned embodiments of the present disclosure.

According to another aspect of the embodiments of the present disclosure, a VNF device is provided, which may include: a determination component, configured to determine a changing policy for VMs of a VNF; and a changing component, configured to initiate multiple requests to an VNFM according to the changing policy to request the VNFM to change the VMs, wherein each request contains one or more VMs to be changed based on this request, and the VNFM is configured to change, in response to each request, the one or more VMs to be changed based on this request.

In an exemplary embodiment, the determination component may be configured to determine the changing policy according to a working mechanism of the VMs, wherein the working mechanism includes at least one of: an active and standby mechanism of VMs and a load sharing mechanism of the VMs.

By means of the embodiments of the present disclosure, a changing policy for VMs of a VNF is determined, and the VMs are changed in batches according to the changing policy. The problem of interruption of service units running on VMs resulted from VM changing of a VNF is solved, thereby allowing the service units running on some or all of the VMs to be uninterrupted.

### Brief Description of the Drawings

The drawings illustrated herein are intended to provide further understanding of the present disclosure, and form a part of the present disclosure. The schematic embodiments and illustrations of the present disclosure are intended to explain the present disclosure, and do not form improper limits to the present disclosure. In the drawings:
Fig. 1 is a flowchart of a method for changing VM resources according to an embodiment of the present disclosure;
Fig. 2 is a structural diagram of an apparatus for changing VM resources according to an embodiment of the present disclosure;
Fig. 3 is a structural diagram of a VNF device according to an embodiment of the present disclosure;
Fig. 4 is an exemplary flowchart 1 of a method for changing VM resources according to an embodiment of the present disclosure;
Fig. 5 is an exemplary flowchart 2 of a method for changing VM resources according to an embodiment of the present disclosure;
Fig. 6 is an exemplary flowchart 3 of a method for changing VM resources according to an embodiment of the present disclosure; and
Fig. 7 is an exemplary flowchart 4 of a method for changing VM resources according to an embodiment of the present disclosure.

### Detailed Description of the Embodiments

The present disclosure will be illustrated below with reference to the drawings and in conjunction with the embodiments in detail. It is important to note that the embodiments of the present disclosure and the characteristics in the embodiments may be combined under the condition of no conflicts.

In the embodiments below, functional units such as an NFVO, a VNFM, a VIM, an NFVI and a VNF may be implemented by means of a computer program unit, and different functional units may be located in the same device or distributed in different devices, which may be set by those skilled in the art as required.

In the embodiment below, devices may be commonly used devices (for instance, a server and a host) in a communication system or devices of other types. The device may include a processor and a storage medium, wherein the processor may execute a computer program unit in the storage medium.

It can be foreseen that the method and apparatus according to the embodiments of the present disclosure may be implemented by means of a computer program unit, wherein the computer program unit may be stored in a storage medium or executed by a processor. In a distributed computation scenario such as cloud computation, the computer program unit may be distributed in a network or cooperatively operated by a plurality of processors.

According to the embodiments of the present disclosure, a method for changing VM resources is provided. In the embodiments of the present disclosure, changing may include any changing of VM resources of a VNF such as capacity expansion and capacity reduction of the VNF.

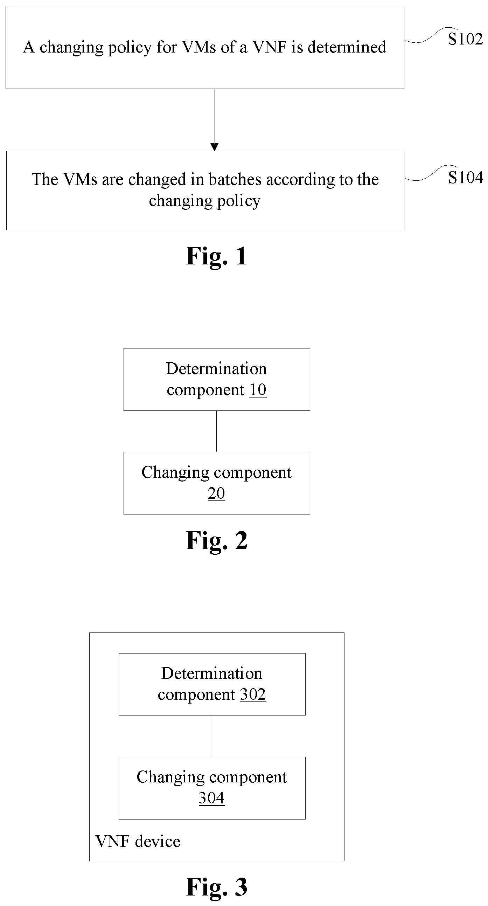

Fig. 1 is a flowchart of a method for changing VM resources according to an embodiment of the present disclosure. As shown in Fig. 1, the method includes Step S102 to Step S104.

Step 102: A changing policy for VMs of a VNF is determined.

Step 104: The VMs are changed in batches according to the changing policy.

Compared with changing of all VMs of a VNF at one time in the related art, the embodiments of the present disclosure avoid interruption of service units running on all VMs and ensure the reliability of service running.

It is important to note that in the embodiments of the present disclosure, as long as the VMs are changed in batches according to the changing policy, the effect of ensuring the reliability of service running can be achieved to some extent.

In one implementation of the embodiments of the present disclosure, the changing policy may be determined according to a working mechanism of the VMs. In an exemplary embodiment, the working mechanism of the VMs may include at least one of: an active and standby mechanism of VMs and a load sharing mechanism of the VMs.

In one implementation of the embodiments of the present disclosure, the changing policy includes at least one of: a changing sequence of each of the VMs and a changing batch number of each of the VMs.

In an exemplary embodiment, if a VM adopts the active and standby mechanism, the active VM runs service unit, and the standby VM takes over service unit when the active VM is faulty. Or, the standby VM and the active VM run the same service unit simultaneously, the active VM can be changed first, in this case, the standby VM runs the service unit, after the active VM is completely changed, the standby VM is changed, and in this case, the changed active VM runs the service unit. Certainly, in the embodiments of the present disclosure, the working modes and quantities of active VMs and standby VMs are not limited. By means of the exemplary implementation, service non-interruption can be ensured.

In an exemplary embodiment, service units can be allocated to run on VMs according to the load sharing mechanism of the VMs. VMs which do not run services are changed, after changing is completed, the changed VMs take over running tasks of the service units, and unchanged VMs are changed.

In an exemplary embodiment, the two modes can be used in conjunction. For instance, under the situation that an active VM corresponds to a plurality of standby VMs, the active VM can be changed first, some standby VMs are changed, and then the other standby VMs are changed.

In one implementation of the embodiments of the present disclosure, the changing policy may be directly determined; or the changing policy may be determined via negotiation with the VNF. The VNF may set a changing policy of VMs associated with the VNF. In an exemplary embodiment, the changing policy may be determined according to the working mechanism of the VMs, wherein the working mechanism of the VMs includes, but is not limited to, an active and standby mechanism of VMs and a load sharing mechanism of the VMs.

In one implementation of the embodiments of the present disclosure, in Step S104, multiple requests may be initiated to an NFVO according to the changing policy to request the NFVO to change the VMs, wherein each request may contain one or more VMs to be changed based on this request, and the NFVO is configured to change, in response to each request, the one or more VMs to be changed based on this request.

In an exemplary embodiment, before Step S104, at least one response to at least one VM changing request initiated by the VNF and/or the NFVO may be made.

It is important to note that multiple requests and multiple responses from the NFVO in the implementation are not limited to a one-request one-response mode, and may adopt a multi-request multi-response mode, which is not limited herein in the embodiments of the present disclosure. Certainly, the multiple requests may be completed in one request message, or the multiple requests may be completed using multiple request messages.

In an exemplary embodiment, the embodiments of the present disclosure may adopt a one-request one-request-message mode and a one-request one-response mode, and after one response process is completed, a next round of request and response process is executed.

In another implementation of the embodiments of the present disclosure, in Step S104, multiple responses to the multiple changing requests initiated by the VNF according to the changing policy can be made, multiple requests, each of with requests to change one or more VMs to be changed based on this request, are respectfully initiated to the NFVO, wherein the NFVO is configured to change, in response to each request, the one or more VMs to be changed based on this request.

It is important to note that multiple requests, multiple responses and responses from the NFVO in the implementation are not limited to a one-request one-response mode, and may adopt a multi-request multi-response mode, which will not be limited herein in the embodiments of the present disclosure. Certainly, the multiple requests may be completed in one request message, or the multiple requests may be completed using multiple request messages. That is, the VNF may send one request message and initiate multiple requests in the request message, or may receive a request message and respectively initiate multiple requests to the NFVO in response to the multiple requests in the request message. Certainly, initiation and response modes of the request are not limited.

In an exemplary embodiment, the embodiments of the present disclosure may adopt a one-request one-request-message mode and a one-request one-response mode, and after a response process is completed, a next round of request and response process is executed.

In the embodiments of the present disclosure, the VNF, the NFVO and the like may actively initiate a changing request for VMs of the VNF, or may actively initiate a changing request, which will not be limited herein in the embodiments of the present disclosure certainly. During initiation of or response to the request, the VMs can be changed in batches.

According to the embodiments of the present disclosure, in correspondence to the method, an apparatus for changing VM resources is provided. It may be foreseen that the apparatus may be implemented by means of a computer program unit, wherein the computer program unit may be stored in a storage medium.

Correspondingly, the embodiments of the present disclosure also provide a computer program product, which includes a storage medium and a computer program unit stored in the storage medium to implement the above apparatus. The computer program unit may contain an instruction for implementing the above method.

Fig. 2 is a structural diagram of an apparatus for changing VM resources according to an embodiment of the present disclosure. As shown in Fig. 2, the apparatus mainly includes: a determination component 10 and a changing component 20, wherein the determination component 10 is configured to determine a changing policy for VMs of a VNF; and the changing component 20 is coupled with the determination component 10 and is configured to perform resource change for the VMs in batches according to the changing policy.

Compared with changing of all VMs of a VNF at one time in the related art, the embodiments of the present disclosure avoid interruption of service units running on all VMs and ensure the reliability of service running.

In one implementation of the embodiments of the present disclosure, the determination component 10 may be configured to determine the changing policy according to a working mechanism of the VMs, wherein the working mechanism includes at least one of: an active and standby mechanism of VMs and a load sharing mechanism of the VMs.

In an exemplary embodiment, if a VM adopts the active and standby mechanism, the active VM runs service unit, and the standby VM takes over service unit when the active VM is faulty. Or, the standby VM and the active VM run the same service unit simultaneously, the active VM can be changed first, in this case, the standby VM runs the service unit, after the active VM is completely changed, the standby VM is changed, and in this case, the changed active VM runs the service unit. Certainly, in the embodiments of the present disclosure, the working modes and quantities of active VMs and standby VMs are not limited. By means of the exemplary implementation, service non-interruption can be ensured.

In an exemplary embodiment, service units can be allocated to run on VMs according to the load sharing mechanism of the VMs. VMs which do not run services are changed, after changing is completed, the changed VMs share running tasks of the service units, and unchanged VMs are changed.

In an exemplary embodiment, the two modes can be used in conjunction. For instance, under the situation that an active VM corresponds to a plurality of standby VMs, the active VM can be changed first, some standby VMs are changed, and then the other standby VMs are changed.

In one implementation of the embodiments of the present disclosure, the determination component 10 may be configured to: directly determine the changing policy; or determine the changing policy via negotiation with the VNF. In an exemplary embodiment, the VNF may set a changing policy as required, and the determination component 10 acquires the changing policy from the VNF.

In one implementation of the embodiments of the present disclosure, the changing component 20 may be configured to initiate multiple requests to an NFVO according to the changing policy to request the NFVO to change the VMs, wherein each request contains one or more VMs to be changed based on this request, and the NFVO is configured to change, in response to each request, the one or more VMs to be changed based on this request.

In an exemplary embodiment, the apparatus further includes: a response component, configured to respond to at least one VM changing request initiated by the VNF and/or the NFVO.

It is important to note that multiple requests and multiple responses from the NFVO in the implementation are not limited to a one-request one-response mode, and may adopt a multi-request multi-response mode, which will not be limited herein in the embodiments of the present disclosure. Certainly, the multiple requests may be completed in one request message, or the multiple requests may be completed using multiple request messages.

In an exemplary embodiment, the embodiments of the present disclosure may adopt a one-request one-request-message mode and a one-request one-response mode, and after a response process is completed, a next round of request and response process is executed.

In another implementation of the embodiments of the present disclosure, the changing component 20 may include: a response unit, configured to respond to multiple changing requests which are initiated by the VNF according to the changing policy; and a changing unit, configured to respectively initiate multiple requests, each of which requests to change one or more VMs to be changed based on this request, to the NFVO, wherein the NFVO is configured to change, in response to each request, the one or more VMs to be changed based on this request.

It is important to note that multiple requests, multiple responses and responses from the NFVO in the implementation are not limited to a one-request one-response mode, and may adopt a multi-request multi-response mode, which will not be limited herein in the embodiments of the present disclosure. Certainly, the multiple requests may be completed in one request message, or the multiple requests may be completed using multiple request messages. That is, the VNF may send one request message and initiate multiple requests in the request message, or may receive a request message and respectively initiate multiple requests to the NFVO in response to multiple requests in the request message. Certainly, initiation and response modes of the request are not limited.

In an exemplary embodiment, the embodiments of the present disclosure may adopt a one-request one-request-message mode and a one-request one-response mode, and after a response process is completed, a next round of request and response process is executed.

According to the embodiments of the present disclosure, a VNFM device is also provided, which includes any apparatus for changing VM resources according to the embodiments of the present disclosure. It may be foreseen that the apparatus may be implemented by means of a computer program unit, wherein the computer program unit may be stored in a storage medium of a VNFM, and may be executed by a processor of the VNFM device.

According to the embodiments of the present disclosure, a VNF device is provided.

Fig. 3 is a structural diagram of a VNF device according to an embodiment of the present disclosure. As shown in Fig. 3, the device mainly includes: a determination component 302 and a changing component 304, wherein the determination component 302 is configured to determine a changing policy for VMs of a VNF; and the changing component 304 is coupled with the determination component 302 and is configured to initiate multiple requests to a VNFM according to the changing policy to request the VNFM to change the VMs, wherein each request contains one or more VMs to be changed based on this request, and the VNFM is configured to change, in response to each request, the one or more VMs to be changed based on this request.

Compared with changing of all VMs of a VNF at one time in the related art, the embodiments of the present disclosure avoid interruption of service units running on all VMs and ensure the reliability of service running.

In an exemplary embodiment, the determination component 302 is configured to determine the changing policy according to a working mechanism of the VMs, wherein the working mechanism includes, but is not limited to, an active and standby mechanism of VMs and a load sharing mechanism of the VMs.

Exemplary implementations of the embodiments of the present disclosure will be described below.

In the present exemplary embodiment, a method for enhancing interaction between an NFVO, a VNFM and a VNF is provided. The VNF can self-define a VM changing policy to meet the requirement of the special scenario of the VNF. For instance, the VNF may change VMs in batches by means of an active and standby mechanism and load sharing mechanism of the VMs and the like, such that the NFVO can smoothly complete operations involving VM changing such as capacity expansion, capacity reduction and upgrading in the case where the VNF does not interrupt services.

Considering that a changing policy for VMs is totally decided by the VNFM or decided by negotiation between the VNFM and the VNF, VM changing policies are different for different VNFs under different application scenarios. Thus, the present embodiment only provides a method for VM changing interaction between an NFVO and a VNFM and a method for implementing VM changing policy interaction between a VNFM and a VNF. The specific VM changing policy is self-defined by the VNF.

In the exemplary embodiment, changing in batches may be achieved by means of the following two modes: 1) a VM changing policy is decided by the VNFM, and the VNFM initiates multiple requests to the NFVO to request the NFVO to change VMs; and 2) the VM changing policy is decided by negotiation between the VNFM and the VNF, and the VNFM initiates multiple requests to the NFVO to request the NFVO to change VMs.

The interaction method in which the VM changing policy is decided by the VNFM, and the VNFM initiates multiple requests to the NFVO to request the NFVO to change VMs may include that: when the NFVO requests the VNFM to change VMs of the VNF, the VNFM determines a VM changing policy (for instance, a VM changing sequence is determined according to an active and standby mechanism, a load sharing mechanism and the like between VMs), then initiates multiple VM changing requests to the NFVO until all VMs are completely changed, and then returns a VM changing ending response to the NFVO.

The interaction method in which the VM changing policy is decided by the VNFM, and the VNFM initiates multiple requests to the NFVO to request the NFVO to change VMs may include that: when actively initiating VM changing, the VNFM determines a VM changing policy (for instance, a VM changing sequence is determined according to an active and standby mechanism, a load sharing mechanism and the like between VMs), and then initiates multiple VM changing requests to the NFVO until all VMs are completely changed.

The interaction method in which the VM changing policy is decided by negotiation between the VNFM and the VNF, and the VNFM initiates multiple requests to the NFVO to request the NFVO to change VMs may include that: when the NFVO requests the VNFM to change VMs of the VNF, the VNFM requests the VNF to change VMs, the VNF determines a VM changing policy (for instance, a VM changing sequence is determined according to an active and standby mechanism, a load sharing mechanism and the like between VMs), and then initiates multiple VM changing requests to the VNFM until all VMs are completely changed, and after the VNF returns VM changing ending to the VNFM, the VNFM returns a VM changing ending response to the NFVO.

The interaction method in which the VM changing policy is decided by negotiation between the VNFM and the VNF, and the VNFM initiates multiple requests to the NFVO to request the NFVO to change VMs may include that: when actively initiating VM changing, the VNF determines a VM changing policy (for instance, a VM changing sequence is determined according to an active and standby mechanism, a load sharing mechanism and the like between VMs), and then initiates multiple VM changing requests to the VNFM until all VMs are completely changed.

Compared with the related art, the exemplary embodiment enables a VNF to self-define a VM changing policy under an NFV scenario by means of a method for enhancing interaction between an NFVO, a VNFM and a VNF, and meets the requirement of a special scenario of the VNF. For instance, a VM changing operation of the VNF is achieved in the case where VNF services are uninterrupted.

During specific implementation, the method for enhancing interaction between an NFVO, a VNFM and a VNF of the exemplary embodiment can be applied to the field of mobile communications subjected to NFV, such as the field of IMS communications, the field of CS communications, the field of LTE/EPS and other fields of mobile communications.

### Exemplary implementation 1

In the exemplary implementation, a VNFM implements a VM changing policy self-defined by a VNF.

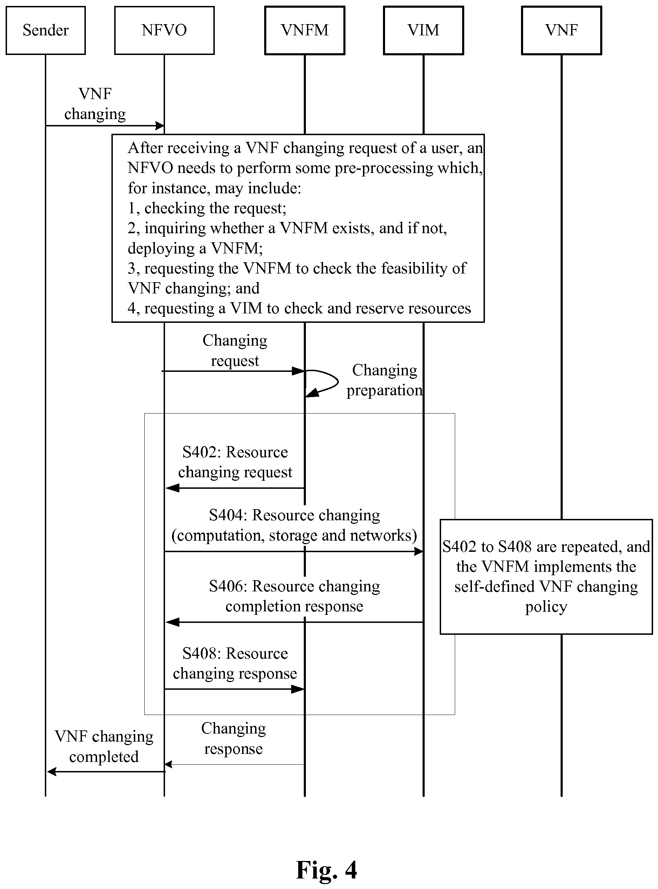

Fig. 4 is an exemplary flowchart 1 of a Method for changing VM resources according to an embodiment of the present disclosure. As shown in Fig. 4, a VM resource changing process includes the steps (Step S402 to Step S408) as follows.

When a user executes a VNF changing process (such as capacity expansion, capacity reduction and upgrading) by means of an NFVO, the NFVO initiates a VNF changing request to the VNFM, the request carrying changing parameters such as a changing virtual network element, an operation type and other operation-related parameters. The VNFM changes VM resources. The VNFM makes necessary preparations such as checking whether the virtual network element in the request is valid.

Step S402: The VNFM determines VMs needing to be changed in a virtual network element according to a VM changing policy of the VNF. For instance, the VNFM processes the VMs needing to be changed in batches according to a pre-configured rule or locally-recorded VNF VM attributes in accordance with an active and standby mechanism, a load sharing mechanism and the like. Then, the VNFM requests the NFVO to change a first batch of VMs.

Step S404: The NFVO initiates a changing request to a VIM, the request carrying information of one or more VMs to be changed such as a specific VM list and VM changing define list.

Step S406: The VIM changes the one or more VMs, and returns a response to the NFVO after completely changing the one or more VMs.

Step S408: The NFVO returns a changing response to the VNFM, the response carrying a changing result such as a changed VM list and result.

If the VNFM judges that there are still VMs needing to be changed, Step S402 to Step S408 are repeatedly executed, and subsequent batches of VMs are changed until all batches of VMs are completely changed.

The VNFM returns an operation response to the NFVO.

### Exemplary implementation 2

In the exemplary implementation, a VNFM implements a VM changing policy self-defined by a VNF.

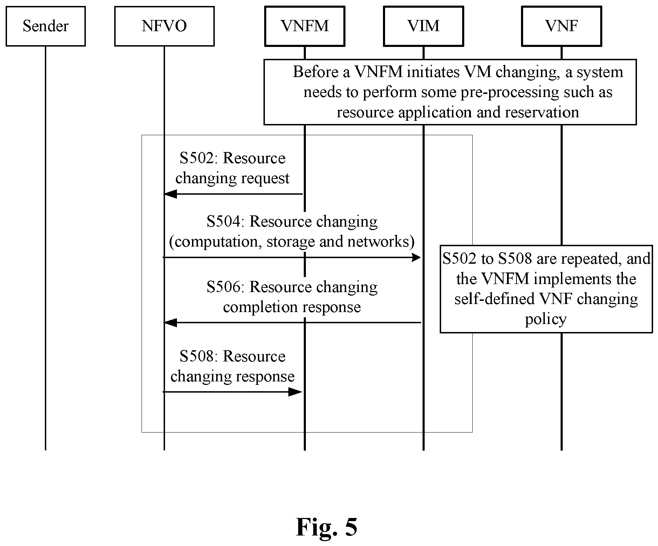

Fig. 5 is an exemplary flowchart 2 of a method for changing VM resources according to an embodiment of the present disclosure. As shown in Fig. 5, a VM resource changing process includes the steps (Step S502 to Step S508) as follows.

When the VNFM actively initiates VM changing, the VNFM determines, for instance, a VM list needing to be changed according to a load situation of the VNF, and the VNFM determines VM batches needing to be changed according to a VM changing policy of the VNF such as a pre-configured rule or locally-recorded VNF VM attributes in accordance with an active and standby mechanism, a load sharing mechanism and the like.

Step S502: The VNFM initiates a VM changing request to an NFVO, the request carrying information of one or more VMs to be changed such as a VM list needing to be changed.

Step S504: The NFVO initiates a changing request to a VIM, the request carrying information of one or more VMs to be changed such as a specific VM list and VM resource changing define list.

Step S506: The VIM changes VM resources, and returns a response to the NFVO after completely changing the VM resources.

Step S508: The NFVO returns a changing response to the VNFM, the response carrying a changing result such as a changed VM list and result.

If the VNFM judges that there are still VMs needing to be changed, Step S502 to Step S508 are repeatedly executed, and subsequent batches of VMs are changed until all batches of VMs are completely changed.

### Exemplary implementation 3

In the exemplary implementation, a VM changing policy is achieved by negotiation between a VNFM and a VNF.

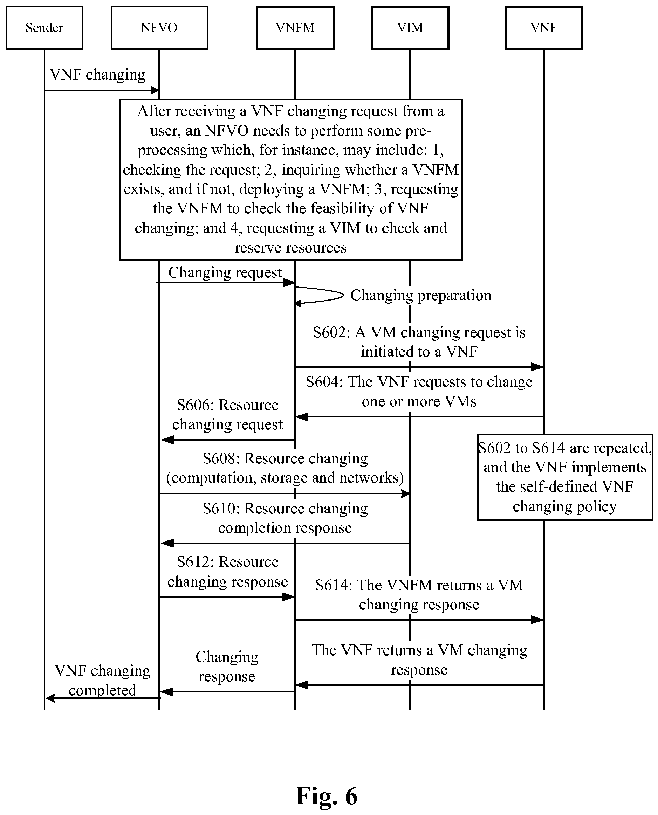

Fig. 6 is an exemplary flowchart 3 of a method for changing VM resources according to an embodiment of the present disclosure. As shown in Fig. 6, a VM resource changing process includes the steps (Step S602 to Step S614) as follows.

When a user executes a VNF changing process (such as capacity expansion, capacity reduction and upgrading) by means of an NFVO, the NFVO initiates a VNF changing request to the VNFM, the request carrying VNF changing information such as a virtual network element to be changed, an operation type and other operation-related parameters. The VNFM makes necessary preparations such as checking whether the virtual network element in the request is valid.

Step S602: The VNFM initiates a VM changing request to the VNF (if the VNFM determines VM information to be changed, the request carries VM information needing to be changed).

Step S604: After acquiring the VM information needing to be changed (the information may be acquired from a VM changing request of the VNFM or may be determined by the VNF itself), the VNF processes VMs needing to be changed in batches according to a VM changing policy such as a pre-configured rule or locally-recorded VNF VM attributes in accordance with an active and standby mechanism, a load sharing mechanism and the like, and then requests the VNFM to change a first batch of VMs.

Step S606: The VNFM initiates a VM changing request to the NFVO, the request carrying VM information to be changed such as a VM list needing to be changed.

Step S608: The NFVO initiates a changing request to a VIM, the request carrying VM information to be changed such as a specific VM list and VM resource changing define list.

Step S610: The VIM changes VM resources, and returns a response to the NFVO after completely changing the VM resources.

Step S612: The NFVO returns a changing response to the VNFM, the response carrying a changing result such as a changed VM list and result.

Step S614: The VNFM returns the changed VM list to the VNF.

If the VNF judges that there are still VNFs needing to be changed, Step S602 to Step S614 are repeatedly executed until all VMs are completely changed.

The VNF returns a VM changing ending response to the VNFM. Then, the VNFM returns a VNF changing response to the NFVO.

### Exemplary implementation 4

In the exemplary implementation, in a VM changing process actively initiated by a VNF, the VNF self-defines a VM changing policy.

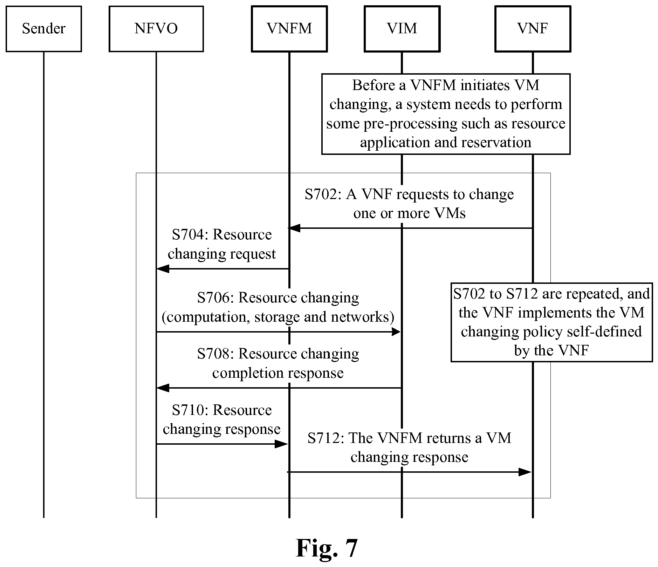

Fig. 7 is an exemplary flowchart 4 of a method for changing VM resources according to an embodiment of the present disclosure. As shown in Fig. 7, a VM resource changing process includes the steps (Step S702 to Step S712) as follows.

When the VNF initiates VM changing, the VNF determines a VM list needing to be changed according to a load situation, and determines VM batches needing to be changed according to a VM changing policy of the VNF such as a pre-configured rule or locally-recorded VNF VM attributes in accordance with an active and standby mechanism, a load sharing mechanism and the like.

Step S702: The VNF initiates a VM changing request to the VNFM, the request carrying VM information to be changed such as a VM list needing to be changed.

Step S704: The VNFM initiates a VM changing request to the NFVO, the request carrying VM information to be changed such as a VM list needing to be changed.

Step S706: The NFVO initiates a changing request to a VIM, the request carrying VM information to be changed such as a specific VM list and VM resource changing define list.

Step S708: The VIM changes VM resources, and returns a response to the NFVO after completely changing the VM resources.

Step S710: The NFVO returns a changing response to the VNFM, the response carrying a changing result such as a changed VM list and result.

Step S712: The VNFM returns a VM changing response to the VNF.

If the VNF judges that there are still VMs needing to be changed, Step S702 to Step S712 are repeatedly executed until all VMs are completely changed.

From the above descriptions, it can be seen that the embodiments of the present disclosure achieve the technical effects as follows. A VNF self-defines a VM changing policy, and the requirement of a special scenario of the VNF is met. For instance, a VM changing operation of the VNF is achieved in the case where VNF services are uninterrupted.

Obviously, those skilled in the art shall understand that all components or all steps in the present disclosure may be implemented using a general computation apparatus, may be centralized on a single computation apparatus or may be distributed on a network composed of a plurality of computation apparatuses. Optionally, they may be implemented using executable program codes of the computation apparatuses. Thus, they may be stored in a storage apparatus and executed by the computation apparatuses, the shown or described steps may be executed in a sequence different from this sequence under certain conditions, or they are manufactured into each integrated circuit component respectively, or a plurality of components or steps therein is manufactured into a single integrated circuit component. Thus, the present disclosure is not limited to a combination of any specific hardware and software.

The above is only the exemplary embodiments of the present disclosure, and is not used to limit the present disclosure. There may be various modifications and variations in the present disclosure for those skilled in the art. Any modifications, equivalent replacements, improvements and the like within the principle of the present disclosure shall fall within the protective scope defined by the appended claims of the present disclosure.

### Industrial Applicability

As above, the method and apparatus for changing VM resources and the VNF device provided by the embodiments of the present disclosure have the beneficial effects as follows. Interruption of service units running on VMs resulted from VM changing of a VNF can be relieved or avoided.

## Claims

1. A method for changing Virtual Machine, VM, resources, comprising:
determining a changing policy for VMs of a Virtualized Network Function, VNF; and
performing resource change for the VMs in batches according to the changing policy.

2. The method as claimed in claim 1, wherein determining the changing policy for the VMs of the VNF comprises:
determining the changing policy according to a working mechanism of the VMs, wherein the working mechanism comprises at least one of: an active and standby mechanism of VMs and a load sharing mechanism of the VMs.

3. The method as claimed in claim 1 or 2, wherein the changing policy comprises at least one of: a changing sequence of each of the VMs and a changing batch number of each of the VMs.

4. The method as claimed in claim 1 or 2, wherein determining the changing policy for the VMs of the VNF comprises:
directly determining the changing policy; or
determining the changing policy via negotiation with the VNF.

5. The method as claimed in claim 1, wherein performing the resource change for the VMs in batches according to the changing policy comprises:
initiating multiple requests to a Network Functions Virtualization Orchestrator, NFVO, according to the changing policy to request the NFVO to change the VMs, wherein each request contains one or more VMs to be changed based on this request, and the NFVO is configured to change, in response to each request, the one or more VMs to be changed based on this request.

6. The method as claimed in claim 5, wherein before the VMs are changed in batches according to the changing policy, the method further comprises:
responding to at least one VM changing request initiated by the VNF and/or the NFVO.

7. The method as claimed in claim 1, wherein performing the resource change for the VMs in batches according to the changing policy comprises:
in response to multiple changing requests initiated by the VNF according to the changing policy, respectively initiating multiple requests, each of which requests to change one or more VMs to be changed based on this request, to the NFVO, wherein the NFVO is configured to change, in response to each request, the one or more VMs to be changed based on this request.

8. An apparatus for changing Virtual Machine, VM, resources, comprising:
a determination component, configured to determine a changing policy for VMs of a Virtualized Network Function, VNF; and
a changing component, configured to perform resource change for the VMs in batches according to the changing policy.

9. The apparatus as claimed in claim 8, wherein the determination component is configured to determine the changing policy according to a working mechanism of the VMs, wherein the working mechanism comprises at least one of: an active and standby mechanism of VMs and a load sharing mechanism of the VMs.

10. The apparatus as claimed in claim 8 or 9, wherein the determination component is configured to: directly determine the changing policy; or determine the changing policy via negotiation with the VNF.

11. The apparatus as claimed in claim 8, wherein
the changing component is configured to initiate multiple requests to a Network Functions Virtualization Orchestrator, NFVO, according to the changing policy to request the NFVO to change the VMs, wherein each request contains one or more VMs to be changed based on this request, and the NFVO is configured to change, in response to each request, the one or more VMs to be changed based on this request.

12. The apparatus as claimed in claim 11, further comprising:
a response component, configured to respond to at least one VM changing request initiated by the VNF and/or the NFVO.

13. The apparatus as claimed in claim 8, wherein the changing component comprises:
a response unit, configured to respond to multiple changing requests which are initiated by the VNF according to the changing policy; and
a changing unit, configured to respectively initiate multiple requests, each of which requests to change one or more VMs to be changed based on this request, to the NFVO, wherein the NFVO is configured to change, in response to each request, the one or more VMs to be changed based on this request.

14. A Virtualized Network Function Manager, VNFM, device, comprising the apparatus as claimed in any one of claims 8 to 13.

15. A Virtualized Network Function, VNF, device, comprising:
a determination component, configured to determine a changing policy for Virtual Machines, VM, of a VNF; and
a changing component, configured to initiate multiple requests to a Virtualized Network Function Manager, VNFM, according to the changing policy to request the VNFM to change the VMs, wherein each request contains one or more VMs to be changed based on this request, and the VNFM is configured to change, in response to each request, the one or more VMs to be changed based on this request.

16. The device as claimed in claim 15, wherein the determination component is configured to determine the changing policy according to a working mechanism of the VMs, wherein the working mechanism comprises at least one of: an active and standby mechanism of VMs and a load sharing mechanism of the VMs.
